# EUROPEAN PATENT APPLICATION

(11) **EP 4 570 363 A1**
(43) Date of publication of application: **18.06.2025**
(21) Application number: 23216148.9
(22) Date of filing: 13.12.2023
(51) Int. Cl.: B01D 67/00, B01D 53/22, B01D 71/02

(54) **METHOD FOR TREATING A GRAPHENE MEMBRANE AND MEMBRANE OBTAINED BY THE METHOD**

(71) Applicant: Université de Fribourg, 1700 Fribourg (CH)
(72) Inventor: ASHIROV, Timur, 1700 Fribourg (CH); COSKUN, Ali, 1752 Villars-sur-Glâne (CH)
(74) Representative: Schneiter, Sorin

(57) **Abstract**

The present invention concerns a method for producing a nanoporous 2D film, for example a graphene membrane. The method comprises exposing the non-porous 2D film to a reactive plasma and etching the 2D film so as to provide said nanoporous 2D film. In an embodiment, the method is a two-step method, comprising the initial deposition, by sputtering, of a protective layer comprising an inorganic oxide or nitride, before etching the 2D film. The nanoporous 2D films are useful for gas-separation.

## Description

### Technical Field

The present invention generally relates to 2D (two-dimensional) film treatment and fabrication, in particular graphene membranes. In some aspects, the invention provides a method for providing a graphene membrane comprising nanopores. In some aspects, the invention relates to membranes for gas separation.

### Background Art and Problems Solved by the Invention

Separation processes are of great economic importance as they account for 40%-90% of capital costs in the industry. In this context, membranes play a pivotal role in gas separation, water purification, solvent treatment, and biomedical applications due to their high energy efficiency, low cost, robustness, reliability, and scalability. Gas separation is used, for example for COz-separation in general, flue gas treatment, hydrogen recovery, for example from syngas, and natural gas purification applications.

Graphene is considered as an ideal membrane material due to its atomic thickness and its significantly higher permeability compared to the commercially existing membranes. This reduces the operational costs of the membranes due to a very negligible pressure drop across the membrane. However, graphene is not porous and impermeable to any gases, which requires artificial pore fabrication (etching) for membrane applications.

The perforation of graphene membranes is the subject of manifold efforts and research. For example, US 2013/0249147 A1 discloses a method for perforating a graphene membrane by exposing a stream of gas into plasma, and to direct the activated gas stream toward a graphene sheet, and perforating the graphene sheet with the activated gas stream. Indeed, it is known that oxygen can be added to an activated gas in order to etch the graphene sheet. However, it is difficult to control pore size and overall porosity under such conditions.

In gas separation applications, the two key performance parameters are selectivity (Sᵢⱼ or αᵢⱼ), and permeance Pi of the preferentially permeating gas (i). High permeance enables high gas flow rate and high amounts of gas that can be treated, and high selectivity means that the resulting separated gases are highly purified. Generally, there is a compromise to be taken between these two parameters: the higher the permeability, the lower the selectivity, and the higher the selectivity, the lower the permeability. This applies, in particular, but not only, to gas separation by way of molecular sieving.

In this context, WO 2022/136447 discloses, in Figure 2 panel A, different basic principles of gas separation, which are Knudsen diffusion, solution-diffusion, adsorptive separation, besides molecular sieving. In adsorptive separation, disclosed in WO 2022/136447, the membrane need to be regenerated once the adsorptive material on the membrane is saturated. While these membranes achieve a high ratio between selectivity and permeance, the regeneration step may be regarded as less desirous, for example when large amounts of gases need to be separated.

Under all these concepts, it is desirous to provide a graphene membrane with pores having a narrow distribution of pore size, and to have a controlled porosity, which means, an adjustable number of pores per surface area. In particular, it is an objective to provide graphene membranes having pores in the nanometer range, preferably the lower nanometer range. In some applications, mean pore sizes of below 20 nm and even lower are preferred. In some cases, mean pore sizes of 1-20 nm or around 2-10 nm are preferred.

Another important element is to be able to provide a fabrication method that is scalable and cost effective, allowing for the industrial preparation of the porous membranes. Many perforation methods developed in the lab, such as focused ion beam milling (FIB) and ion-beam tracking, are not suitable for upscaling. Further regarding FIB, this technique does not allow to get pore sizes below 5 nm, and the resulting membranes have low selectivity. Treatments with reactive gases, UV or ozone plasma, on the other hand, allow for obtaining Angstrom-sized pores (< 1 nm), but result in low overall porosity and thus low permeance, and non-uniform pore sizes.

It is an objective of the present invention to provide porous graphene membranes with high porosity, mean pore sizes ranging from 1 nm up to micron, preferably from 3 nm to micron, and a narrow size-distribution.

Further objectives and problems addressed by the present invention will become apparent from the description of the aspects and embodiments of the invention herein below.

### Summary of the Invention

Surprisingly, the present inventors provide methods for producing 2D films comprising nanopores. The pores are obtained by exposing the 2D film to a plasma comprising a reactive gas. In preferred embodiments, the plasma comprises components that are deposited on the 2D film, while or before the nanoholes are created.

In an aspect, the invention provides a method of treating a non-porous 2D film in order to prepare a 2D film comprising nanopores, the method comprising: providing a 2D film, and, exposing said 2D film to a plasma, wherein said plasma comprises components suitable to deposit an inorganic oxide or inorganic nitride on said 2D film.

Preferably, said 2D film at the beginning, before treatment according to the method of the invention, is non-porous.

In an aspect, the invention provides a method for producing a 2D film comprising nanopores, the method comprising: providing a 2D film, and, exposing said 2D film to a plasma to obtain said membrane comprising nanopores.

In an embodiment, a plasma suitable to create said nanoholes further comprises components that are deposited on said 2D film.

In an embodiment, a plasma suitable to create said nanoholes further comprises components that are deposited on said 2D film.

In an aspect, the invention provides a single step method for producing 2D films comprising nanopores, wherein said non-porous 2D membrane is exposed directly to a plasma suitable to create said nanopores.

In another aspect, the invention provides a two-step method for producing 2D films comprising nanopores, wherein a non-porous 2D membrane is exposed to a first plasma that is not suitable to create said nanopores and then to a second plasma suitable to create said nanopores.

In another aspect, the invention provides a two-step method for producing 2D films comprising nanopores, wherein a non-porous 2D membrane is exposed to a first plasma suitable to deposit an inorganic oxide or inorganic nitride on said 2D film and subsequently to a second plasma suitable to create said nanopores.

In an aspect, the invention provides a nanoporous 2D film obtained by the method of the invention.

In an aspect, the invention provides the use of the nanoporous 2D film of the invention in gas separation.

In an aspect, the invention provides a method for separating gases, the method comprising exposing a mixture of gases to the nanoporous 2D film of the present invention.

Further aspects and preferred embodiments of the invention are defined herein below and in the appended claims. Further features and advantages of the invention will become apparent to the person skilled in the art from the description of the preferred embodiments given below.

### Brief Description of the Drawings

**Figure 1** shows, in panels A to E, SEM images of nanoporous graphene membranes obtained in accordance with embodiments of the present invention. The image in the top panels show 2x2 arrays of 0.8 µm *SiNₓ* pores covered with double layer of graphene, and the lower panel shows a magnified single 0.8 µm *SiNₓ* window showing the nanopores in the membrane
**Figure 2** shows pore size distributions of the corresponding membranes shown in Figure 1, panels A-E.

Hereinafter, preferred embodiments of the device of the invention are described, in order to illustrate the invention, without any intention to limit the scope of the present invention.

### Detailed Description of the Preferred Embodiments

The present invention relates to methods for producing 2D film comprising nanopores. The method comprises exposing a preferably substantially non-porous film to a plasma.

In an embodiment, the 2D film comprises and/or consists essentially of a material selected from the group consisting of graphene, graphene oxide (GO), reduced graphene oxide (rGO), transition metal dichalcogenides (TMDs), and hexagonal boron nitride (hBN).

In an embodiment, the 2D film is a membrane.

In an embodiment, the 2D film comprises and/or consists essentially of graphene or of a graphene derivative. Derivatives of graphene include, for example, GO, rGO, graphdyine, graphyne, just to mention a few.

The 2D film may be provided in the form of a multilayer, for example a double layer of graphene, GO, rGO, and so forth, including mixed double layers, such as graphene-GO, graphene-rGO, GO-graphydine, and so forth. All combinations of multilayers, such as double and triple layers of different 2D films are encompassed as a 2D film of the present invention. Multilayer 2D film may comprise two or more 2D films comprising and/or made of different materials.

In a preferred embodiment, the 2D film is a graphene membrane.

The 2D film that is subjected to the treatments of the present invention is preferably non-porous initially. However, the invention does not exclude, including in the preferred embodiments below, the presence of pores in the 2D film before the treatment in accordance with the invention. In such a case the method of the invention preferably results in additional pores and/or larger pores. Furthermore, the 2D film may comprise pores for fixing the 2D film in a frame or for other purposes. The term "nonporous" is thus intended to mean, for the purpose of the present specification "lacking the pores that are created by the method of the invention".

In an embodiment, the method comprises treating a non-porous 2D film, preferably by exposing said non-porous 2D film to a plasma. During said exposure to said plasma, nanopores may be formed directly, or may not yet be formed, depending on whether said nanopores are formed in a one-step procedure or in a two-step procedure. In the case of the two-step procedure, an inorganic oxide or inorganic nitride is deposited on said non-porous 2D film, preferably without any pores being generated. This layer may function a protective layer. In the case of a one-step procedure, the nanopores are generated generally while at the same time an inorganic oxide or inorganic nitride is deposited.

It is noted that the terms "one-step" and "two-step" are not intended to exclude additional steps, during, before and/or after the deposition of said inorganic oxide or inorganic nitride. These terms refer to a distinction wherein an inorganic oxide or inorganic nitride is either deposited while at the same time nanopores are created, or where a complete layer of an inorganic oxide or inorganic nitride is first deposited, followed by the generation of the pores in the substantially non-porous, coated 2D film comprising said inorganic oxide or nitride as a coating or layer. In case of a two-step method, the two steps may be conducted in the same or in different apparatuses and/or devices.

In an embodiment, exposing said non-porous 2D film to a plasma comprises depositing, by Physical Vapor Deposition (PVD), said inorganic oxide or inorganic nitride on said non-porous 2D film. The inorganic oxide or inorganic nitride may be deposited by any suitable sputtering or evaporation instrument. In a preferred embodiment, the inorganic oxide or inorganic nitride is deposited by sputter deposition in presence of a plasma.

In a preferred embodiment, the method of the invention comprises:
- providing a target comprising said inorganic oxide, inorganic nitride or a precursor thereof, and,
- sputtering said inorganic oxide, inorganic nitride or said precursor from said target so as to obtain a plasma comprising said components.

In a preferred embodiment, the said inorganic oxide or inorganic nitride is selected from the group consisting of oxides and nitrides of Si, Al, Ge, In, Sn, Mg, Ta, V, Ti, and Zr. In a preferred embodiment, said inorganic oxide is SiOz.

In an embodiment, said components are suitable to deposit one selected from the group consisting of SiOz, Al₂O₃, AlSc, GeOz, In₂O₃, SnOz, MgOz, TazOs, TiOz, TiN, V₂O₅, ZrOz, and ZrOx, where x is in the range of >1 and <3.

In accordance with the above, the inorganic oxide or nitride is preferably selected from SiOz, Al₂O₃, AlSc, GeO₂, In₂O₃, SnO₂, MgO₂, Ta₂O₅, TiO₂, TiN, V₂O₅, ZrO₂, and ZrO_{X}, where x is in the range of >1 and <3.

In a preferred embodiment, said components are suitable to deposit SiOz on said 2D film. In an embodiment, said plasma is a SiOz plasma.

The components for deposition may be provided as a target material in the sputtering instrument, wherein the components are ejected from the surface of the target after bombardment of the target by energetic particles, typically in the presence of an electric or magnetic field.

The target material may be substantially the material that is deposited. In this case, the target may comprise directly the components of the material to be deposited, for example the target may be made of SiOz, or any of the other oxides and nitrides mentioned above. In other embodiments, the target may form the material that is deposited together with components in the plasma, such as oxygen. In this case, the target may comprise a precursor material, for example the inorganic material in elemental form, and the corresponding oxide and/or nitride is formed due to the presence of oxygen and nitrogen, and ionized forms thereof, that is pumped into the deposition chamber.

In a preferred embodiment, said plasma further comprises providing a reactive gas or reactive gas mixture, preferably comprising one or more selected from oxygen (Oz), nitrogen (N₂) and argon (Ar) gas, more preferably at least oxygen as a reactive gas, and most preferably at least oxygen and argon.

In a preferred embodiment, the method comprises providing nanoholes in said non-porous 2D film by exposing said non-porous 2D film to a plasma and adding the reactive gas to said plasma at a rate suitable to generate said nanoholes in said 2D film, preferably at a rate of 5 sccm or higher.

In a preferred embodiment, the method of the invention is a one-step method for producing a 2D film comprising nanopores, wherein said non-porous membrane is exposed to said plasma comprising said components suitable to deposit an inorganic oxide or inorganic nitride on said 2D film, wherein said method comprises simultaneously adding said reactive gas to said plasma at a rate suitable to generate said nanoholes.

Without wishing to be bound by theory, it is hypothesized that said nanoholes are formed by etching in the presence of the plasma comprising said components of said inorganic oxide or nitride, and preferably one or both selected from oxygen and argon.

In a preferred embodiment of the one-step method, said reactive gas is or comprises oxygen, wherein oxygen is added at a rate of 5 to 80 sccm, preferably 8 to 60 sccm, more preferably 10 to 30, and wherein said membrane is exposed to said plasma for a duration that is sufficient to create said nanopores. Preferably, said duration is from 1 second to 10 minutes, more preferably from 2 seconds to 5 minutes, even more preferably from 3 seconds to 1 minute, and most preferably from 5 to 30 seconds.

Sccm stands for a gas flow of "standard cubic centimeters per minute". Preferably, gas flow rates are kept substantially constant at a value of the ranges indicated herein for the corresponding time.

In a preferred embodiment, oxygen is added at a rate of 10 to 50 sccm, preferably 11 to 40 sccm, more preferably 12 to 30 sccm, and most preferably 13 to 20 sccm.

In a preferred embodiment, the duration of oxygen addition to the plasma is in the range of 1 s to 1.5 mins, preferably 2 s to 1 min, more preferably 5 s to 45 s, and most preferably 9 s to 30 s.

Preferably, said gas or reaction gas also comprises argon. Argon is preferably provided at a rate of 50-200 sccm, preferably 60-170 sccm, more preferably 70-150 sccm, and most preferably 80-130 sccm.

Preferably, oxygen and argon are provided simultaneously for the above indicated time intervals. In some embodiments, the reactive gas comprises nitrogen in addition to oxygen, or comprises nitrogen gas instead of oxygen.

Preferably, the sputtering instrument is used by applying a power 100-1'200 W, more preferably 400-1'100 W, and most preferably 300-1'050 W, and a frequency of 10-20 Mhz, preferably 12-17 Mhz, most preferably 13-15 Mhz, for example about 14 Mhz.

The above power inputs correspond to the energy that is put into the plasma and determines the amount of the target material that is sputtered.

Preferably, the sputtering instrument is equipped with a DC generator and an RF generator. While the operation of a sputtering instrument in a RF mode is herewith exemplified, the same output can be obtained in other modes, such as DC mode, combined DC RF mode, or pulsed DC mode, as long as the appropriate plasma is generated.

In a particular embodiment, the sputtering instrument is a magnetron sputtering instrument, such as the Pfeiffer SPIDER600 instrument used in the examples. In such instruments, a magnetic field is used to control the plasma in such a way that it reacts with the target material, not with the substrate (here the substrate is the 2D film).

In is noted that the 2D film, for example a graphene membrane, is preferably placed on a support during exposure to the plasma as described. Examples of suitable supports are silicon nitride supports, polymeric supports, supports of glass fibre, and cupper foils, just to make some examples. In some embodiments, the support is itself porous, but comprises pores in the µm or mm range, for example pores having a size of from 300 nm to 100 µm, preferably 500 nm to 50 µm, most preferably 700 nm to 10 µm.

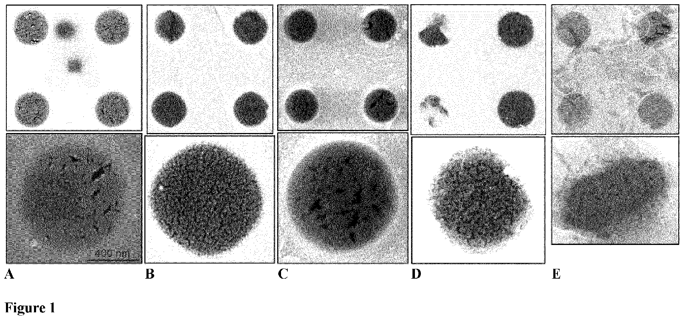

Under the conditions described above, nanopores of having the desired sizes and size-distribution are surprisingly obtained, as illustrated, for example, in the enclosed figure 1.

As mentioned above, the method may comprise two separate steps, wherein the two separate steps may be conducted in the same or in different devices. In accordance with the two-step method, an inorganic oxide or nitride layer is deposited first, without any pores being generated. The deposited layer may then function as a protection in the subsequent etching of pores. In accordance with this embodiment, the conditions, such as the exposure time, flow of various gases, during deposition in the first step are preferably adjusted so that etching sufficient to generate pores does not or cannot not occur.

In a preferred embodiment, the method of the invention comprises the two steps of:
(1) depositing said inorganic oxide or inorganic nitride on said non-porous 2D film by exposing said non-porous 2D film to a first plasma comprising said components; and,
(2) exposing said non-porous 2D film of step (1) to a second plasma comprising a reactive gas suitable to generate nanoholes in said non-porous membrane.

In a preferred embodiment, step (1) comprises adding said reactive gas, preferably oxygen, to said plasma, at a rate that is insufficient to generate nanoholes in said non-porous 2D film. In an embodiment, oxygen and/or nitrogen in addition to argon gas are added to form a plasma in the first step.

In a particular embodiment, the flow rate of argon of as described above for the one-step method, but the flow of oxygen gas is preferably below 100 sccm, preferably below 50 sccm, even more preferably below 20 sccm, and most preferably below 10 sccm, for example in the range of 1-10 sccm. The flow of nitrogen, if present is preferably in the range of 1-100 sccm, more preferably 2-50 sccm, even more preferably 5-40 sccm, and most preferably 10-20 sccm.

During step (1), the plasma is preferably maintained for a duration of 10 s to 10 mins, more preferably from 15 s to 5 mins, even more preferably from 20 s to 2 min, and most preferably from 30 s to 1 min.

Preferably, a power of 200-1'200 W of DC, more preferably 300-1'100 W, and most preferably 500-1'050 W. Preferably, the above said with respect to RF power or other modes (DC, pulsed DC) also applies to this step.

The conditions and duration are preferably selected so as to deposit a layer of the inorganic oxide or nitride material on the 2D film. The thickness of the deposited material is preferably from 5-150 nm, more preferably 10-100 nm, and most preferably 20-60 nm. As mentioned above, pores are preferably not yet generated during this step. The Oz and/or N₂ are preferably used as diluting gases in this case, assisting in the formation of the protective inorganic oxide and/or nitride layer.

In a preferred embodiment, in step (2), said reactive gas, preferably oxygen, is preferably added to said plasma at a rate of 30 sccm or higher, preferably 50 sccm or higher, more preferably 100 sccm or higher, and most preferably 200 sccm or higher. The flow rate is preferably also selected depending on the size of the chamber containing the plasma, with larger chambers preferably requiring higher flow rates. In larger chambers, such as those used in the example for the second step, the flow rate may be 200 sccm or higher, for example 300 sccm or higher. In particular, in step (2), the flow of oxygen is preferably higher than during step (1). More generally, a high energy Oz plasma is preferably applied. Without wishing to be bound by theory, the present inventors hypothesize that the increased flow of oxygen into the plasma and/or the high energy oxygen plasma contributes to the generation of the nanopores in the 2D film that comprises the inorganic oxide and/or nitride coating deposited in step (1).

In step (2), flow of Oz is preferably from 100-700 sccm, preferably 200-600sccm, and more preferably 300-500 sccm, most preferably 350-450 sccm.

The power is preferably in the range of 50-500 W RF, preferably 90-450W, more preferably 120-400 W, and most preferably 150-250 W, wherein the RF has the same frequency as described herein above. As above, other modes of generating the plasma, such as based on DC and pulsed DC, may also be used.

The duration of plasma treatment during step (2) is preferably from 0.5-20 mins, preferably 1-15 mins, more preferably 2-10 mins, and most preferably 3-8 mins.

In a final treatment step, the protective inorganic oxide and/or inorganic nitride layer may be removed again. This may be accomplished by exposing the coated, nanoporous 2D film to an appropriate solution or solvent, for example to an acidic solution for removing an SiO² layer that has been deposited in step (1).

The step of removing deposited inorganic oxide and/or inorganic nitride may also be applied in case of the one-step method, in which said inorganic oxide and/or inorganic nitride is deposited at the same time as the nanopores are generated.

In a preferred embodiment, the nanoporous 2D film obtained by the method of the invention comprises nanopores that have a mean pore width of ≤ 50 nm, preferably ≤ 30 nm, more preferably ≤ 20 nm, even more preferably ≤ 10 nm and most preferably ≤ 10 nm. In a particular embodiment, the mean pore with is ≤ 5 nm.

In a preferred embodiment, said 2D film comprising nanopores has a porosity of > 0.5%, preferably > 1%, more preferably > 3%, even more preferably > 4%, and most preferably > 5%, wherein said porosity is the surface of the membrane covered by the pores compared to the overall operational surface of the membrane.

Pore sizes and porosity may be determined from electron microscopy such as TEM and SEM electron microscopy images, such as TEM or SEM, and analysis of the pores in an automated manner. Preferably, a representative sample or area of the nanoporous 2D film is selected and statistically evaluated. Software for conducting image analysis for determining pore sizes and porosity include Imaged, QuPath, CellProfiler, Ilastik, Orbit, Icy, Cytomine, and PathML. For the analysis in the examples, ImageJ was used.

The above pore sizes apply to the pores that are generated by the method of the present invention. Possible other pores that are present in the membrane for other reasons are not included in the above figures on mean pore size and porosity.

The above pore sizes and/or porosity preferably apply to the operational or selective part of the 2D film, which is the part that is used for gas separation or intended for gas separation, and more specifically the part that will be exposed directly to a mixture of gases to be separated. The 2D may comprise a border region and/or other parts and areas of its total surface, which other parts may be used to fix the 2D film, for example in a frame, or which other parts may be used for other purposes. These other parts may have different (or no) pores and porosities, as these other parts are not related to the gas-separation properties of the membrane.

The present invention also concerns the use of the nanoporous 2D films in gas separation and a method for separating gases. The method of separating gases preferably comprises exposing a mixture of gases to the nanoporous 2D film of the present invention. Preferably, said nanoporous 2D film is a graphene membrane.

The nanoporous 2D film preferably comprises first and second opposed, main sides, and the film is exposed to a mixture of gases on a first side. A separated gas is preferably collected on the second side. The separated gas preferably selectively passes through the pores of said nanoporous 2D film, in particular, at a transfer rate that is higher than the transfer rate of one or more other gases that are present in said mixture of gases. The separation principle is preferably molecular sieving, wherein the molecules of the separated gas are smaller than other gases of the mixture, and the nanopores in the 2D film let said smaller gas molecules pass through the pores, while other gas molecules are too large to pass through the pores. It is noted here that the above does not apply necessarily to all molecules of a given gas in a gas mixture. The nanopores also have a certain size distribution, so that a 100% selectivity of gases is desired, but not always obtained.

In a preferred embodiment, there is no pressure drop across the membrane during gas separation, although, in some embodiments, there may be a pressure drop, and the existence of a pressure drop, even if it is not preferred, is also encompassed by the present invention. In an embodiment, the method comprises exposing said mixture of gases to an above-ambient pressure on a first side of said nanoporous 2D film and collecting a separated gas on a second side of said 2D film. In other embodiments, a vacuum may be created on the side of the collection of the separated gas while the gas on the mixture other side of the membrane is exposed to ambient pressure or to an above-ambient pressure.

It is note that the gas mixture subjected to gas separation by the method of the invention may comprise two or more gases, and the separated gas may comprise one or more gases. Generally, the separated gas contains less or lacks at least one type of gas that was present in the original gas mixture that was subjected to gas separation.

Examples of gas mixtures from which gases can be separated encompass flue gas. In this case, COz is preferably separated from the flue gas mixture. In another embodiment, said gas mixture is syngas and said separated gas is or comprises H₂.

In yet another embodiment, the gas mixture is a biogas and the separated gas is or comprises methane (CH₄). The nanoporous 2D film may also be used for nitrogen enrichment, wherein any gas mixture, for example air, comprising N₂ is exposed to the nanoporous 2D film and the Nz-enriched gas is collected at the side of the separated gas.

The invention also provides a nanoporous gas separation membrane comprising the nanoporous 2D film of the invention.

While certain of the preferred embodiments of the present invention have been described and specifically exemplified above, it is not intended that the invention be limited to such embodiments. Various modifications may be made thereto without departing from the scope and spirit of the present invention, as set forth in the following claims. Herein below, examples of the invention are disclosed. These examples are for illustration only and are not intended to limit the scope of the present invention.

### Examples

### Examples 1-5: Single step etching of pores into non-porous graphene membranes

The aim in this approach is to etch pores on graphene membranes in single step. In this approach pores were generated using SiOz plasma in combination with Oz plasma in a Sputtering instrument (Pfeiffer SPIDER600, at the EPFL, Lausanne). A double-layer graphene sample on a Silicon nitride support or copper foil was placed into the vacuum chamber with pressure of ~8×10⁻⁶ mbar. Then, 98 sccm of Ar, 13 sccm of Oz was flown into the chamber and SiOz plasma was formed by applying 1000W power (FR mode) to the SiOz target. The gas and SiOz plasma form instantaneously. The duration of plasma was kept between 5 to 60 seconds. We also varied the gas flow, mainly Oz, plasma power, and duration for optimization. The parameters of Examples 1-5 are shown in Table 1 below:

**Table 1: Parameters of graphene treatment in sputtering instrument**

| Example | Power (W) | Ar flow rate (sccm) | O₂ flow rate (sccm) | Exp. time (s) |
|---|---|---|---|---|
| A | 1000 | 98 | 13 | 10 |
| B | 1000 | 98 | 13 | 15 |
| C | 1000 | 98 | 13 | 20 |
| D | 250 | 98 | 13 | 20 |
| E | 100 | 98 | 13 | 20 |

Figure 1 panels A to D show SEM images of graphene membranes on *SiNₓ* substrate obtained in accordance with Examples A-D: the top images show a 2x2 array of 650 nm pores on *SiNₓ* covered with the double layer of graphene.

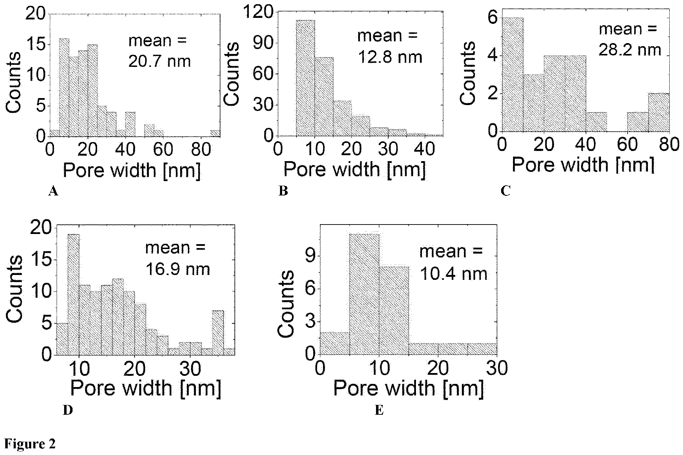

Figure 2 panels A to D show the corresponding pore size distribution histograms of SEM images calculated using ImageJ software. Note: SEM images were digitally enhanced in order to better visualize the graphene holes.

Surprisingly, the SiOz plasma, in combination with added Oz at a relatively low flow rate results in the controlled and tunable creation of nanoholes in the graphene membrane. The size distribution of the nanoholes is in the lower nanosized range, which renders the membranes suitable in gas separations applications. It appears that in this configuration the SiOz components in the plasma have a protective effect, preventing rapid etching of the graphene membrane. An oxygen flow rate of at least 10 sccm is required or preferred. If the flow rate is lower, no pore formation is observed. There is too much variation when high power (1000 W) is used, such that lower RF power inputs are preferred.

### Example 6: Two step method for generation of pores in graphene membranes

The aim in this approach is to obtain more controlled pore generation method in 2 steps. In the 1^{st} step mesoporous SiO₂ plasma is deposited onto the graphene sample using the combination of Ar, Oz and/or N₂ plasma in a Sputtering instrument (SPIDER600, EPFL CMi cleanrooms). The graphene sample on a Silicon nitride support or copper foil was placed into the vacuum chamber with pressure of ~8×10⁻⁶ mbar. Then, 98 sccm of Ar, 5-10 sccm of Oz and 10-20 sccm of Nz was flown into the chamber. The SiOz plasma was formed by applying 1000W of power (RF mode) to the SiOz target. The gas and SiOz plasma form instantaneously and the duration of plasma was kept between 60-90 seconds. We varied the gas flows O₂ and N₂ and duration for optimization. Here mesoporous SiOz is deposited, and the mesoporous SiOz layer will serve as a sacrificial mask to etch graphene in a second step. Graphene is not etched in this case due to low flow rate of O₂. The O₂ and N₂ plasma in this case are used as diluting gases to form mesoporous silica mask.

Graphene is etched in the 2^{nd} step by using high energy Oz plasma in a Tepla Gigabatch 300 plasma stripper. The parameters are as follows: 400 sccm of Oz flow at 200W DC RF power and duration of 5 minutes. Finally, the mesoporous silica mask is removed by using 1% HF solution for 5 minutes.

Observations: This method is repeatable and can provide even smaller pores.

## Claims

**1.** A method for treating a non-porous 2D film in order to prepare a 2D film comprising nanopores, the method comprising:
- providing a 2D film, and,
- exposing said non-porous 2D film to a plasma, wherein said plasma comprises components suitable to deposit an inorganic oxide or inorganic nitride on said 2D film.

**2.** The method of claim 1, wherein exposing said non-porous 2D film to a plasma comprises depositing by Physical Vapor Deposition (PVD) said inorganic oxide or inorganic nitride on said non-porous 2D film.

**3.** The method of claim 1 or claim 2, wherein said method comprises:
- providing a target comprising said inorganic oxide, inorganic nitride or a precursor thereof, and,
- sputtering said inorganic oxide, inorganic nitride or said precursor from said target so as to obtain a plasma comprising said components.

**4.** The method of any one of the preceding claims, wherein said inorganic oxide or inorganic nitride is selected from the group consisting of oxides and nitrides of Si, Al, Ge, In, Sn, Mg, Ta, V, Ti, and Zr.

**5.** The method of any one of the preceding claims, wherein said components are suitable to deposit one selected from the group consisting of SiOz, Al₂O₃, AlSc, GeO₂, In₂O₃, SnO₂, MgO₂, Ta₂O₅, TiO₂, TiN, V₂O₅, ZrO₂, and ZrO_{X}, where x is in the range of >1 and <3.

**7.** The method of any one of the preceding claims, wherein said 2D film comprises or essentially consists of graphene, graphene oxide (GO), transition metal dichalcogenides (TMDs), hexagonal boron nitride (hBN), preferably graphene.

**8.** The method of any one of the preceding claims, wherein said components are suitable to deposit SiOz on said 2D film.

**9.** The method of any one of the preceding claims, wherein said plasma further comprises providing a reactive gas, preferably comprising one or more selected from oxygen (Oz), nitrogen (N₂) and argon gas, more preferably oxygen as a reactive gas.

**10.** The method of claim 9, which comprises providing nanoholes in said non-porous 2D film by exposing said non-porous 2D film to a plasma and adding the reactive gas to said plasma at a rate suitable to generate said nanoholes in said 2D film, preferably at a rate of 5 sccm or higher.

**11.** The method of any one of the preceding claims, which is a one-step method for producing a 2D film comprising nanopores, wherein said non-porous membrane is exposed to said plasma comprising said components suitable to deposit an inorganic oxide or inorganic nitride on said 2D film, wherein said method comprises simultaneously adding said reactive gas to said plasma at a rate suitable to generate said nanoholes.

**12.** The method of claim 11, wherein said reactive gas is oxygen which is added at a rate of 5 to 50 sccm, and wherein said membrane is exposed to said plasma for a duration that is sufficient to create said nanopores, wherein said duration is preferably from 1 second to 10 minutes, more preferably from 2 seconds to 5 minutes, even more preferably from 3 seconds to 1 minute, and most preferably from 5 to 30 seconds.

**13.** The method of any one of claims 1-9, which comprises the two separate steps of:
(3) depositing said inorganic oxide or inorganic nitride on said non-porous 2D film by exposing said non-porous 2D film to a first plasma comprising said components; and,
(4) exposing said non-porous 2D film of step (1) to a second plasma comprising a reactive gas suitable to generate nanoholes in said non-porous membrane.

**14.** The method of claim 13, wherein, in step (2), said reactive gas, preferably oxygen, is preferably added to said plasma at a rate of 100 sccm or higher, preferably 200 sccm or higher, more preferably 300 sccm or higher.

**15.** The method of any one of claims 13 and 14, wherein step (1) comprises adding said reactive gas, preferably oxygen, to said plasma, at a rate that is insufficient to generate nanoholes in said non-porous 2D film.

**16.** The method of any one of the preceding claims, wherein said nanopores have a mean pore width of ≤ 50 nm, preferably ≤ 30 nm, more preferably ≤ 20 nm, and most preferably ≤ 10 nm.

**17.** The method of any one of the preceding claims, wherein said 2D film comprising nanopores has a porosity of > 0.5%, preferably > 1%, more preferably > 3%, even more preferably > 4%, and most preferably > 5%, wherein said porosity is the surface of the membrane covered by the pores compared to the overall operational surface of the membrane.

**18.** The 2D film obtained by any one of the preceding claims.

**19.** The use of the 2D film of any one of the preceding claims in gas separation.

**20.** A method for separating gases, the method comprising exposing a mixture of gases to the 2D film of any one of the preceding claims.

**21.** The method of claim 20, which comprises exposing said mixture of gases to an above-ambient pressure on a first side of said 2D film and collecting a separated gas on a second side of said 2D film.

**22.** The method of any one of claims 20 and 21, wherein said gas mixture is flue gas and said separated gas is COz, or wherein said gas mixture is syngas and said separated gas is H₂, or wherein the gas mixture is biogas and the separated gas is methane (CH₄), or wherein the method is for nitrogen enrichment, wherein the mixture of gases contains N₂ mixed with other gases, and N₂ is separated to be at a higher concentration on the side of the separated gas.

**23.** A gas separation membrane comprising a 2D film comprising nanopores, wherein:
- said nanopores have a mean pore width of ≤ 50 nm, preferably ≤ 30 nm, more preferably ≤ 20 nm, even more preferably ≤ 15 nm, and most preferably ≤ 10 nm;
- said membrane comprising nanopores has a porosity of > 0. 5%, preferably > 1%, more preferably > 3%, even more preferably > 3%, and most preferably > 5%, wherein said porosity is preferably the surface of the membrane covered by the pores compared to the overall operational surface of the membrane.
